# EUROPEAN PATENT SPECIFICATION

(11) **EP 3 872 380 B1**
(45) Date of publication and mention of the grant of the patent: **16.08.2023**
(21) Application number: 19876841.8
(22) Date of filing: 25.10.2019
(51) Int. Cl.: F16K 31/06

(54) **ELECTRONIC EXPANSION VALVE**
ELEKTRONISCHES EXPANSIONSVENTIL
VANNE D'EXPANSION ÉLECTRONIQUE

(30) Priority: 27.10.2018 CN 201811262155; 16.01.2019 CN 201910041251
(43) Date of publication of application: 01.09.2021
(73) Proprietor: Zhejiang Sanhua Intelligent Controls Co., Ltd., Shaoxing, Zhejiang 312500 (CN)
(72) Inventor: HE, Weixin, Shaoxing, Zhejiang 312500 (CN); CHANG, Qing, Shaoxing, Zhejiang 312500 (CN); YUAN, Ze, Shaoxing, Zhejiang 312500 (CN); SHEN, Zicheng, Shaoxing, Zhejiang 312500 (CN)
(74) Representative: Maikowski & Ninnemann Patentanwälte Partnerschaft mbB
(86) International application number: PCT/CN2019/113233
(87) International publication number: WO 2020/083362

(56) References cited:
- EP-A1- 3 171 058
- CN-A- 104 806 774
- CN-A- 108 361 385
- JP-A- 2008 095 892
- US-A- 4 362 027

## Description

### FIELD

The present application relates to the technical field of refrigeration control, and particularly to an electronic expansion valve.

### BACKGROUND

A refrigeration system usually includes a compressor, a throttling member, an outdoor heat exchanger and other components. The throttling member may adopt an electronic expansion valve to regulate refrigerant flow. When the refrigerant passes through the electronic expansion valve, some noise may be generated. Therefore, the structure of the electronic expansion valve may be optimized to reduce the noise generated when the refrigerant passes through the electronic expansion valve.
US 4,362,027 A1 discloses a modulating electrically-operated valve utilized in the refrigeration control system, the valve includes a valve body provided with an internal chamber. An inlet port places the chamber in communication with the outlet of the condenser. An outlet port places the chamber in communication with the inlet of an evaporator. The valve body includes a valve seat in the chamber between the inlet and outlet ports. A valve member is reciprocatively mounted in the valve chamber and cooperates with the valve seat to control flow through the inlet and outlet ports.
CN 104 806 774 A discloses an electronic expansion valve including a main valve body and a valve core part. The valve core part and the main valve body are fixed together by threaded connection. The main valve body includes an inlet, an outlet and a connection channel. The valve core part includes a valve seat fixed to the main valve body, and the valve seat is provided with a valve chamber and throttling orifice.

### SUMMARY

An object of the present invention is to provide an electronic expansion valve to reduce the noise generated when the refrigerant passes through the electronic expansion valve.

For the above object, the following technical solution is provided in the present application.

An electronic expansion valve according to the present invention is defined in claim 1.

The electronic expansion valve according to the present application includes the first valve seat chamber and the second valve seat chamber. When the refrigerant passes through the electronic expansion valve in one flow direction, the refrigerant enters into the second valve seat chamber from the first valve seat chamber through the valve port of the valve port portion. Since a diameter of the second valve seat chamber is greater than a diameter of the second pipe connecting portion, and is greater than a diameter of the valve port, the refrigerant will reduce a flow rate and pressure after passing through the valve port, thereby reducing the noise when the refrigerant passes through the electronic expansion valve.

### BRIEF DESCRIPTION OF THE DRAWINGS

In order to more clearly illustrate embodiments of the present application, the drawings to be used in the embodiments or in the description of the conventional technology are briefly described below. Apparently, the drawings in the following description only show some embodiments of the present application, and other drawings may be obtained by those skilled in the art from the drawings without any creative work.
Figure 1 is a schematic sectional view of an electronic expansion valve according to a first example which is not part of the present invention;
Figure 2 is a schematic sectional view of a valve seat assembly in Figure 1;
Figure 3 is a schematic sectional view of another electronic expansion valve according to the first example which is not part of the present invention;
Figure 4 is a schematic sectional view of the valve seat assembly in Figure 3;
Figure 5 is a schematic sectional view of an electronic expansion valve according to a second example which is not part of the present invention;
Figure 6 is a schematic sectional view of the valve seat assembly in Figure 5;
Figure 7 is a schematic sectional view of another electronic expansion valve according to the second example which is not part of the present invention;
Figure 8 is a schematic sectional view of the valve seat assembly in Figure 7;
Figure 9 is a schematic sectional view of an electronic expansion valve according to the embodiment of the present invention;
Figure 10 is a schematic sectional view of the valve seat assembly in Figure 9;
Figure 11 is a schematic sectional view of another electronic expansion valve according to the embodiment of the present invention; and
Figure 12 is a schematic sectional view of the valve seat assembly in Figure 11.

**Reference numerals:**

| | | | |
|---|---|---|---|
| 1 | electronic expansion valve, | 11 | valve seat assembly, |
| 11A | outer wall portion, | 110 | main valve seat, |
| 111 | circumferential wall portion, | 1111 | first circumferential wall portion, |
| 11111 | first port portion, | 1112 | second circumferential wall portion, |
| 1113 | main circumferential wall portion, | 11131 | first port portion, |
| 11132 | second port portion, | 11141 | first port portion, |
| 112 | valve port portion, | 1121 | valve port, |
| 113 | end cover, | 1131 | bottom wall portion, |
| 11311 | second port portion, | 1132 | bottom wall portion, |
| 1133 | bottom wall portion, | 11331 | second port portion, |
| 12 | first pipe connecting portion, | 13 | second pipe connecting portion, |
| 15 | valve body portion, | 16 | housing, |
| 17 | magnetic rotor assembly, | 171 | magnetic rotor, |
| 172 | connecting plate, | 18 | screw rod valve needle assembly, |
| 181 | screw rod, | 182 | valve needle, |
| 183 | sleeve portion, | 184 | end plate portion, |
| 185 | boss, | 186 | spring, |
| 187 | support member, | 19 | nut assembly, |
| 191 | nut, | 192 | connecting piece |

### DETAILED DESCRIPTION OF THE EMBODIMENTS

In order to make those skilled in the art better understand the technical solutions of the present application, the technical solution will be described completely hereinafter in conjunction with the drawings and embodiments of the present application.

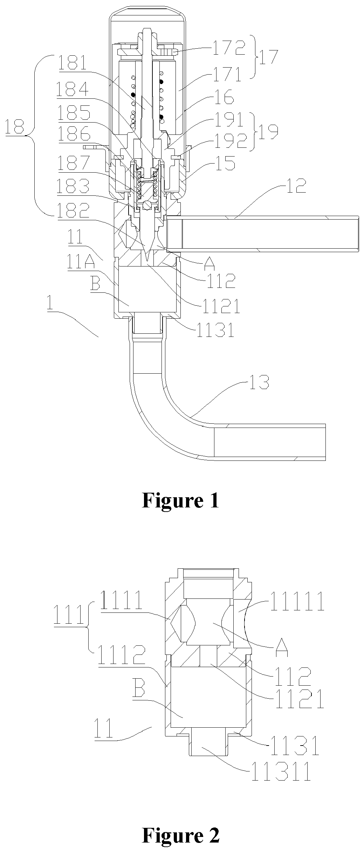

Referring to Figure 1, Figure 1 is a schematic structural view of an electronic expansion valve according to a first example which is not part of the present invention.

It should be noted that, the present application illustrates a specific structure of the electronic expansion valve, and aims to improve the structure of a valve seat assembly of the electronic expansion valve. Other members of the electronic expansion valve, such as a magnetic rotor assembly, a screw rod valve needle assembly, a nut assembly, a stop device and others, are not limited and described in detail here. The present application does not special limit the structure of the above member, those skilled in the art may apply the technical solution disclosed according to the present application to all similar structure of the electronic expansion valve.

The electronic expansion valve 1 is provided with a valve seat assembly 11, and the valve seat assembly 11 is fixedly connected with a first pipe connecting portion 12 and a second pipe connecting portion 13. The structure of the valve seat assembly 11 will be described in detail below. A valve body portion 15 is arranged on a relatively upper side of the valve seat assembly 11. The valve body portion is substantially cup-shaped with an open bottom, an opening is provided on the bottom thereof, and which is fixedly connected to the valve seat assembly 11. Specifically, a step may be arranged on an upper end of the valve seat assembly 11, and the opening at the bottom of the valve body portion 15 is matched with the step, and the opening and the step are fixedly by welding, or fixedly by welding in other forms. The present application does not limit a specific matching structure of the connection between the valve seat portion 15 and the valve seat assembly 11.

A housing 16 is further arranged above the valve body portion 15. The housing 16 may be fixed to the valve body portion 15 by welding. Thus, a space is formed in the housing 16, the valve body portion 15 and the valve seat assembly 11.

It should be noted that, for the electronic expansion valve, the valve body portion 15 does not have to exist, when the valve body portion 15 does not exist, the housing 16 may be directly fixedly connected to the valve seat assembly 11.

A magnetic rotor assembly 17, a screw rod valve needle assembly 18 and a nut assembly 19 are arranged in the space formed by the housing 16, the valve body portion 15 and the valve seat assembly 11. The magnetic rotor assembly 17 is rotatable due to the electromagnetic force of an electromagnetic coil. The magnetic rotor assembly 17 includes a magnetic rotor 171 and a connecting plate 172 fixedly connected or integrally arranged with the magnetic rotor 171. The screw rod valve needle assembly 18 includes a screw rod 181 which is fixedly connected to the connecting plate 172. Thus, the screw rod 181 is connected to the magnetic rotor assembly 17 as a whole through the connecting plate 172. Specifically, the screw rod 181 may be fixedly connected to the connecting plate 172 by welding.

The screw rod valve needle assembly further includes a valve needle 182, a sleeve portion 183, an end plate portion 184, a boss 185, a spring 186 and a support member 187. The screw rod 181 is in floating connection with the valve needle 182 through the sleeve portion 183. The sleeve portion 183 is substantially cup-shaped with an open bottom, and an opening is provided on the bottom thereof. The valve needle 182 passes through the opening and enters into a first valve seat chamber A (described in detail below) to be matched with the valve port 1121 for adjusting. That is, during operation of the electronic expansion valve, the valve needle 182 may move up and down within a certain stroke relative to the sleeve portion 183, but cannot separate from the restriction of the sleeve portion 183. The end plate portion 184 is provided on the top of the sleeve portion 183, and the end plate portion 184 is provided with an end plate thrust surface. A lower end portion of the screw rod 181 is fixedly connected with the boss 185, and the boss 185 is provided with a boss thrust surface. The spring 186 is further provided on the back of the boss thrust surface, and is supported by the support member 187. During assembly, the boss 185 and the screw rod 181 may be fixedly connected with each other first and then put into the internal space of the sleeve portion 183, and then the end plate portion 184 is fixed to the sleeve portion 183 by welding. Thus, the boss thrust surface is opposite to the end plate thrust surface, and the sleeve portion 183 is suspended on the screw rod 181. The sleeve portion 183 cannot be separated from the screw rod 181, but can make a relative movement. The separation described in the present application refers to that the sleeve portion 183 and the screw rod 181 are separated from each other to two separate members without any restriction therebetween, rather than the absence of physical contact between the sleeve portion 183 and the screw rod 181 only.

The nut assembly 19 includes a nut 191 and a connecting piece 192. The nut 191 and the connecting piece 192 are fixedly connected to each other or integrally formed, and the nut 191 is fixed in the space formed by the housing 16 and the valve body portion 15 through the connecting piece 192 made of metal. Specifically, the nut 191 may be made of non-metal material and are integrally injection molded with the connecting piece 192, and the connecting piece 192 is fixedly connected to the valve body portion 15 by welding.

The nut 191 is provided with a through hole in the axial direction thereof, and an internal thread is provided inside the through hole. Correspondingly, a section of external thread is provided on an outer peripheral surface of the screw rod 181. Thus, when the magnetic rotor assembly 17 rotates, the screw rod 181 linked with the magnetic rotor assembly 17 makes an upward and downward movement relative to the nut assembly 19 while rotating under the action of thread pair, thereby driving the valve needle 182 to do the lifting movement.

It should be noted that, the description about the structure of each member above the valve seat assembly 11 is only a specific structure to make those skilled in the art more easily understand the basic working principle of the electronic expansion valve, and does not intend to limit the protection scope of the present application. The technical solution of the present application may also be applied to the electronic expansion valve with other movement structures.

Referring to Figures 1 and 2, Figure 1 is a schematic sectional view of an electronic expansion valve and Figure 2 is a schematic sectional view of the valve seat assembly in Figure 1.

In the first example, an outer wall portion 11A of the valve seat assembly 11 includes a circumferential wall portion 111 which includes a first circumferential wall portion 1111. The valve port portion 112 and the first circumferential wall portion 1111 may be formed by processing integral material, which are integrally formed. The valve port portion 112 and the first circumferential wall portion 1111 may also be processed respectively and then be fixed by welding or interference fit. For ease of description, a member that the valve port portion 112 and the first circumferential wall portion 1111 are integrally formed or fixedly connected to each other is collectively referred to as a first valve seat portion which is substantially cup-shaped. The valve port portion 112 is provided with a valve port 1121. When the valve needle 182 does the upward and downward movement, the valve needle 182 will be away from or close to the valve port portion 112, so that a flow area between the valve port 1121 and the valve needle 182 changes, thereby controlling the flow of the refrigerant passing through the valve port 1121. The circumferential wall portion 111 includes a second circumferential wall portion 1112, and the outer wall portion 11A includes a bottom wall portion 1131. The second circumferential wall portion 1112 and the bottom wall portion 1131 may be integrally formed. The second circumferential wall portion 112 and the bottom wall portion 1131 may also be processed respectively and then be fixed by welding or interference fit. For ease of description, a member that the bottom wall portion 1131 and the second circumferential wall portion 1112 are integrally formed or fixedly connected to each other is collectively referred to as a second valve seat portion which is substantially cup-shaped. The second circumferential wall portion 1112 and the bottom wall portion 1131 are integrally formed, the second circumferential wall portion and the bottom wall portion have no strict distinction in the present embodiment, the bottom wall portion 1131 refers to a bottom region, and the second circumferential wall portion 1112 refers to a peripheral region.

In this specification, the first circumferential wall portion 1111 includes a part of the outer wall portion 11A corresponding to the first valve seat chamber A and a part of the outer wall portion 11A integrated with the part of the outer wall portion 11A corresponding to the first valve seat chamber A and corresponding to the valve port portion 112. The second circumferential wall portion 1112 includes a part of the outer wall portion 11A corresponding to the second valve seat chamber B, and a part of the remaining outer wall portion 11A integrated with the part of the outer wall portion 11A corresponding to the second valve seat chamber B. The first circumferential wall portion 1111 and the second circumferential wall portion 1112 are only used for convenience of description, which may be understood by those skilled in the art conveniently and do not intend to limit the protection scope.

The first valve seat portion may be fixedly connected to the second valve seat portion by welding. Specifically, a stepped portion may by arranged on the bottom of the first valve seat portion, and the second circumferential wall portion 1112 of the second valve seat portion is matched with the stepped portion and then the two are fixed by welding. The way for fixing the first valve seat portion and the second valve seat portion by welding is not limited in the present embodiment.

Thus, the electronic expansion valve includes two chambers, which are respectively the first valve seat chamber A and the second valve seat chamber B. The first valve seat chamber A is located above the valve port portion 112, or at least the most part of the first valve seat chamber A is located above the valve port portion 112. The second valve seat chamber B is located below the valve port portion 112, or at least the most part of the second valve seat chamber B is located below the valve port portion 112. When the valve needle 182 does not close the valve port 1121, the second valve seat chamber B may be in communication with the first valve seat chamber A through the valve port 1121.

The first circumferential wall portion 1111 is provided with a first port portion 11111 for being matched and fixedly connected with the first pipe connecting portion 12. Generally, the first pipe connecting portion 12 is fixedly connected with the valve seat assembly 11 at a position of the first port portion 11111 by welding. The bottom wall portion 1131 is provided with a second port portion 11311 for being matched and fixedly connected with the second pipe connecting portion 13, and the second pipe connecting portion 13 may also be fixedly connected with the valve seat assembly 11 by welding. At this time, the first pipe connecting portion 12 is mostly located above the valve port portion 112 or the first pipe connecting portion 12 is entirely located above the valve port portion 112. The first port portion 11111 is mostly located above the valve port portion 112 or the first port portion 11111 is entirely located above the valve port portion 112, and the second pipe connecting portion 13 and the second port portion 11311 are located below the valve port portion 112. When the refrigerant flows toward the direction of the second pipe connecting portion through the first pipe connecting portion, the second valve seat chamber B is greater than the valve port. Specifically, a portion of the second valve seat chamber B close to the valve port portion is greater than the valve port or an average diameter of the second valve seat chamber B is greater than a diameter of the valve port. Thus, when the refrigerant enters into the second valve seat chamber B from the first valve seat chamber A through the valve port 1121, a flow path of the refrigerant is in a state of rapid amplification, which can effectively reduce a flow rate and pressure of fluid, thereby reducing the noise when the refrigerant passes through. The outer wall portion 11A of the valve seat assembly 11 of the present embodiment includes the outer wall portion 11A of the first valve seat portion and an end cover. The outer wall portion 11A of the valve seat assembly 11 of the present embodiment includes the outer wall portion 11A of the first valve seat portion and the second valve seat portion.

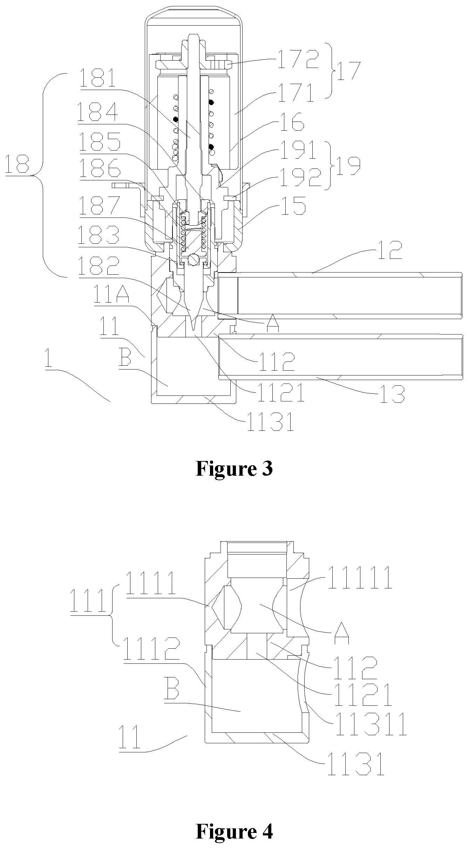

The valve seat assembly 11 may be other structural forms. The second port portion 11311 is not only arranged on the bottom wall portion 1131, but also may be arranged on the circumferential wall portion 111. As shown in Figures 3 and 4, Figure 3 is a schematic sectional view of another electronic expansion valve according to the first example; and Figure 4 is a schematic sectional view of the valve seat assembly in Figure 3. Specifically, the valve seat assembly 111 includes the first valve seat portion and the second valve seat portion. The first valve seat portion is fixedly connected with the second valve seat portion by welding, and the first pipe connecting portion 12 and the second pipe connecting portion 13 are fixedly connected with the valve seat assembly 11 by welding. The first valve seat portion includes the first circumferential wall portion 1111 and the valve port portion 112, and the second valve seat portion includes the second circumferential wall portion 1112 and the bottom wall portion 1131. The first circumferential wall portion 1111 and the valve port portion 112 are integrally formed, and the second circumferential wall portion 1112 and the bottom wall portion 1131 are integrally formed. Most part of the second port portion 11311 of the present embodiment is located on the second circumferential wall portion 1112, and small part of the second port portion is located on the first circumferential wall portion 1111, or in other word, the second port portion 11311 is arranged on the circumferential wall portion 111 of the valve seat assembly 11. At this time, the second pipe connecting portion 13 is led out from a side surface of the valve seat assembly 11. At this time, at least most part of the first pipe connecting portion 12 is located below the valve port portion 112, and at least most part of the second pipe connecting portion 13 is located below the valve port portion 112. An inner chamber of the first pipe connecting portion 12 is in direct communication with the first valve seat chamber A, and an inner chamber of the second pipe connecting portion 13 is in direct communication with the second valve seat chamber B. When the valve port is opened, the inner chamber of the first pipe connecting portion 12 is in communication with the inner chamber of the second pipe connecting portion 13 through the first valve seat chamber A, the valve port 1121 and the second valve seat chamber B.

An inner diameter of the second valve seat chamber B is greater than an inner diameter of the second pipe connecting portion, and an inner diameter of the valve port 1121 is less than an inner diameter of the second valve seat chamber B. Since the shape of the valve port 1121 may have multiple structural forms, that is, for the whole valve port 1121, multiple different inner diameters may exist. In this specification, the inner diameter of the valve port 1121 is an inner diameter at the minimum position of the valve port 1121. When the second valve seat chamber B is a regularly cylindrical chamber, the inner diameter of the second valve seat chamber B is the inner diameter of the second valve seat chamber B. The shape of the second valve seat chamber B may be irregular, which may be an inverted truncated cone shape, a stepped shape or a combination of multiple configurations. When the interior of the second valve seat chamber B is non-standard cylindrical, the second valve seat chamber B is described by the diameter. When the second pipe connecting portion 13 is fixedly connected to the valve seat assembly 11 after enlarging or reducing, the inner diameter of the second pipe connecting portion 13 is the inner diameter of the second pipe connecting portion 13 before enlarging or reducing, or when a cross section of the second pipe connecting portion 13 is non-standard circular, the inner diameter of the second pipe connecting portion 13 is referred to as the diameter of the second pipe connecting portion 13.

According to the above arrangement, the first pipe connecting portion 12 is fixedly connected to the outer wall portion 11A, and a connection portion between the first pipe connecting portion 12 and the outer wall portion 11A is relatively close to the first valve seat chamber A. The second pipe connecting portion 13 is fixedly connected to the outer wall portion 11A, and a connection portion between the second pipe connecting portion 13 and the outer wall portion 11A is relatively close to the second valve seat chamber B. The diameter of the second valve seat chamber B relatively close to the valve port portion 112 is greater than the diameter of the second pipe connecting portion 13, and the diameter of the valve port 1121 may be less than the diameter of the second valve seat chamber B. The average diameter of the second valve seat chamber B may also be arranged to be greater than the diameter of the second pipe connecting portion 13. The diameter of the valve port 1121 is less than the diameter of the second valve seat chamber B, and the diameter of the valve port 1121 is less than the diameter of the second pipe connecting portion 13.

The electronic expansion valve includes the first valve seat chamber A and the second valve seat chamber B. When the refrigerant flows in a flow direction, the refrigerant enters into the second valve seat chamber B through the valve port 1121 of the valve port portion 112 from the first valve seat chamber A, since the second valve seat chamber B is greater than the second pipe connecting portion 13, and greater than the diameter of the valve port 1121, the flow rate and pressure of the refrigerant will be reduced after the refrigerant pass through the valve port 1121, thus reducing the noise when the refrigerant passes through electronic expansion valve. The outer wall portion 11A of the valve seat assembly 11 according to the present embodiment includes the outer wall portion 11A of the first valve seat portion and the second valve seat portion.

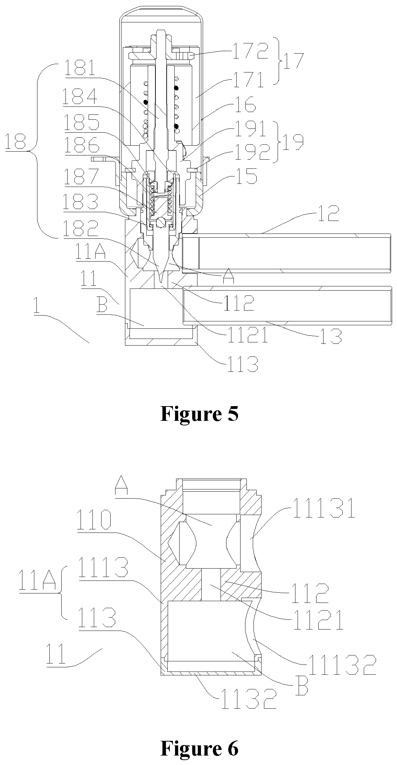

Referring to Figure 5 to Figure 6, Figure 5 is a schematic sectional view of an electronic expansion valve according to a second example which is not part of the present invention; and Figure 6 is a schematic sectional view of the valve seat assembly in Figure 5. The valve seat assembly 11 includes a main valve seat 110 and an end cover 113, and the main valve seat 110 and the end cover 113 are respectively processed and fixedly connected by welding to form the valve seat assembly 11. The main valve seat 110 includes a main circumferential wall portion 1113 and the valve port portion 112, and the main circumferential wall portion 1113 and the valve port portion 112 are integrally formed. The end cover 113 includes the bottom wall portion 1132 and a vice circumferential wall portion, and the bottom wall portion 1132 and the vice circumferential wall portion are integrally formed. The outer wall portion 11A of the valve seat assembly 11 includes the main circumferential wall portion 1113 and the end cover 113. The circumferential wall portion 111 according to the present embodiment includes the circumferential wall portion 111 of the main valve seat 110, that is, the main circumferential wall portion 1113 and the circumferential wall portion 111 of the end cover 113. The main circumferential wall portion 1113 and the valve port portion 112 are integrally formed by processing the same material. The main circumferential wall portion 1113 and the valve port portion 112 may also be processed respectively and then fixedly connected by welding or interference fit. The valve port portion 112 is provided with the valve port 1121. At the lower end of the main wall portion 1113, the main valve seat 110 is fixedly connected to the end cover with the end cover 113, the form for fixedly connecting the main valve seat 110 with the end cover 113 may adopt a method for welding the main circumferential wall portion 1113 with a vice circumferential wall portion of the end cover 113, or a step may be provided at the bottom of the main wall portion 1113. The step is matched with the outer edge of the end cover 113. Then, the step and the edge of the end cover 113 are fixedly connected by welding. The present embodiment does not specific limit the form for fixedly connecting the main valve seat 110 with the end cover 113.

Similarly, the electronic expansion valve includes two chambers, which are first valve seat chamber A and the second valve seat chamber B, respectively. The first valve seat chamber A is located above the valve port portion 112 or at least mostly located above the valve port portion 112, and the second valve seat chamber B is located below the valve port portion 112 or at least mostly located below the valve port portion 112. When a valve needle 182 does not close the valve port 1121, the second valve seat chamber B is in communication with the first valve seat chamber A through the valve port 1121.

The valve seat assembly 11 is provided with a first port portion 11131 on an relatively upper side of the main valve seat 110, the first port portion 11131 is at least mostly located above the valve port portion 112, or in other words, the first port portion 11131 is arranged on an relatively upper side of the main circumferential wall portion 1113. The valve seat assembly 11 is fixedly connected to the first pipe connecting portion 12 at the first port portion 11131 by welding. The valve seat assembly 11 is provided with a second port portion 11132 at a relatively lower side of the main valve seat 110, and the second port portion 11132 is at least mostly located below the valve port portion 112. The valve seat assembly 11 and the second pipe connecting portion 13 are fixedly connected to the second port portion 11132 at the second port portion 11132 by welding. At this time, the second pipe connecting portion 13 is led out from a side of the valve seat assembly 11. At this time, the first pipe connecting portion 12 is located above the valve port portion 112 or at least mostly located above the valve port portion 112, and the second pipe connecting portion 13 is located below the valve port portion 112 or at least mostly located below the valve port portion 112. The outer wall portion 11A of the valve seat assembly 11 according to the present embodiment is not formed by a single part, which includes a part of the main valve seat 110 and an end cover 113. The first circumferential wall portion 1111 is arranged on a relatively upper side of the main valve seat 110, the second circumferential wall portion 1112 is mostly arranged on the main valve seat 110, that is, arranged on a relatively lower side of the main valve seat 110, and the part of the second circumferential wall portion 1112 is further located on the end cover 113.

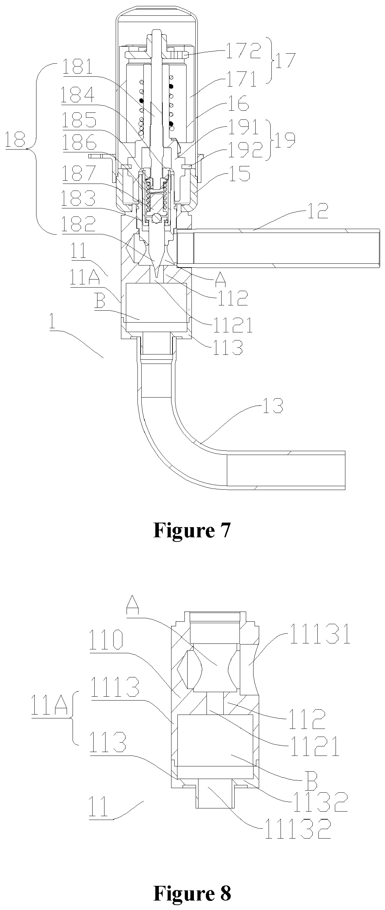

The structure of the valve seat assembly 11 further may be the structure as shown Figures 7 and 8. Figure 7 is a schematic sectional view of another electronic expansion valve according to a second example which is not part of the present invention; and Figure 8 is a schematic sectional view of the valve seat assembly in Figure 7. The valve seat assembly 11 includes the main valve seat 110 and the end cover 113, and the main valve seat 110 also includes the main circumferential wall portion 1113 and the valve port portion 112. The end cover 113 includes the bottom wall portion 1132 and the vice circumferential wall portion (not shown in the figures). The second port portion 11132 may be arranged not only on the circumferential wall portion 111 of the outer wall portion 11A of the valve seat assembly 11 located below the valve port portion 112, but also may be arranged on the bottom wall portion 1132. When the second port portion 11132 is arranged on the bottom wall portion 1132, in order to make the cooperation between the second port portion 11132 and the second valve seat portion more firmly, an extended portion extending downward along a peripheral direction of the second port portion 11132 may be arranged at the bottom wall portion 1132. The extended portion is matched with the second pipe connecting portion 13. Specifically, the second pipe connecting portion 2 is sleeved on the periphery of the extended portion, or the extended portion is sleeved on the periphery of the second pipe connecting portion 13. In addition, as described above, when an outer edge of the bottom wall portion 1132 extends upward to a certain degree, the second port portion 11132 even may be arranged on an outer edge surface of the bottom wall portion 1132. At this time, the first pipe connecting portion 12 is substantially located above the valve port portion 112, and the second pipe connecting portion 13 is basically located below the valve port portion 112.

The second valve seat chamber B is greater than the second pipe connecting portion 13, that is, the inner diameter of the second valve seat chamber B is greater than the inner diameter of the second pipe connecting portion 13, or in other words, a diameter of the second valve seat chamber B is greater than the diameter of the second pipe connecting portion 13, and the inner diameter of the valve port 1121 is less than the inner diameter of the second valve seat chamber B or the diameter at the minimum position of the valve port 1121 is less than the diameter of the second valve seat chamber B. Specifically, the diameter of the second valve seat chamber close to the valve port portion 112 is greater than the diameter of the second pipe connecting portion 13 or the average diameter of the second valve seat chamber B is greater than the diameter of the second pipe connecting portion 13. The diameter of the second valve seat chamber B is greater than the diameter at the minimum position of the valve port 1121. The shape of the valve port 1121 may have multiple different inner diameters or diameters. The diameter of the valve port 1121 is the diameter at the minimum position of the valve port 1121. When the second valve seat chamber B is basically a regularly cylindrical chamber, the inner diameter of the second valve seat chamber B is the inner diameter of the second valve seat chamber B. When the second valve seat chamber B is irregular, the second valve seat chamber B may be inverted plate-shaped, stepped or a combination of multiple structures. When the second pipe connecting portion 13 is fixedly connected to the valve seat assembly 11 after enlarging or reducing, the inner diameter of the second pipe connecting portion 13 refers to the inner diameter of the second pipe connecting portion 13 before enlarging or reducing, or when the section of the second pipe connecting portion 13 is non-standard circular, the inner diameter of the second pipe connecting portion 13 is referred to as the diameter of the second pipe connecting portion 13.

The electronic expansion valve includes the first valve seat chamber A and the second valve seat chamber B. When the refrigerant flows in a flow direction, the refrigerant enters into the second valve seat chamber B through the valve port of the valve port portion from the first valve seat chamber A, since the second valve seat chamber B is greater than the second pipe connecting portion 13, and greater than the valve port 1121, the flow rate and pressure of the refrigerant will be reduced after the refrigerant passes through the valve port 1121, thus reducing the noise when the refrigerant passes through the electronic expansion valve.

The outer wall portion 11A and the bottom wall portion 1132 of the valve seat assembly 11 are relative to the valve seat assembly 11, and are not formed from a single component.

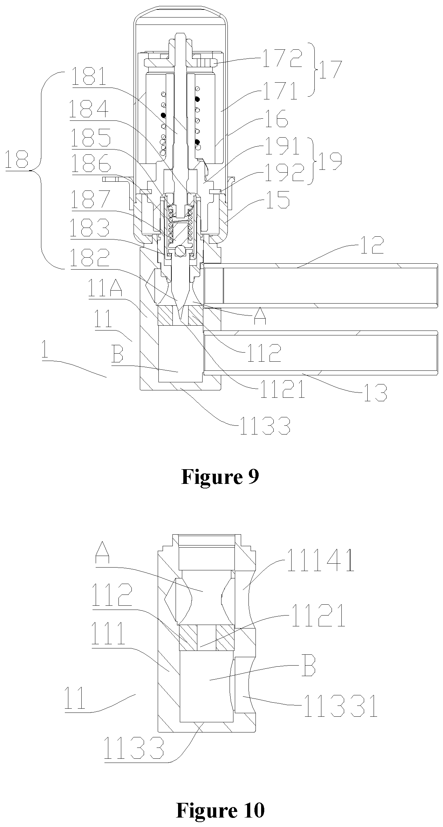

The valve seat assembly 11 may further be other structures, as shown in Figures 9 and 10. Figure 9 is a schematic sectional view of an electronic expansion valve according to the embodiment of the present application; and Figure 10 is a schematic sectional view of the valve seat assembly in Figure 9. The valve seat assembly 11 includes the outer wall portion 11A and the valve port portion 112. The outer wall portion of the valve seat assembly 11 includes the circumferential wall portion 111 and the bottom wall portion 1133. The circumferential wall portion 111 and the bottom wall portion 1133are integrally formed according to the present embodiment. The circumferential wall portion 111 is substantially cylindrical. The valve port portion 112 is provided with the valve port 1121, the valve port portion 112 and the outer wall portion 11A are processed respectively and then fixedly connected by welding or interference fit.

Through the above arrangement, the electronic expansion valve is divided into two chambers through the valve port portion 112, which are the first valve seat chamber A and the second valve seat chamber B, respectively. The first valve seat chamber A is relatively located above the valve port portion 112, and the second valve seat chamber B is located below the valve port portion 112. When the valve needle 182 does not close the valve port 1121, the valve port 1121 is in communication with the first valve seat chamber A and the second valve seat chamber B.

The first port portion 11141 is provided on the relatively upper circumferential wall portion 111 of the outer wall portion 11A of the valve seat assembly 11. The first pipe connecting portion 12 is fixedly connected to the valve seat assembly 11 at the first port portion 11141 by welding. The second port portion 11331 is provided on the relatively lower circumferential wall portion 111 of the outer wall portion 11A of the valve seat assembly 11. The second pipe connecting portion 13 is fixedly connected to the valve seat assembly 11 at the second port portion 11331 by welding. At this time, the first pipe connecting portion 12 at least mostly located above the valve port portion 112, and the second pipe connecting portion 13 is entirely or at least mostly located below the valve port portion 112.

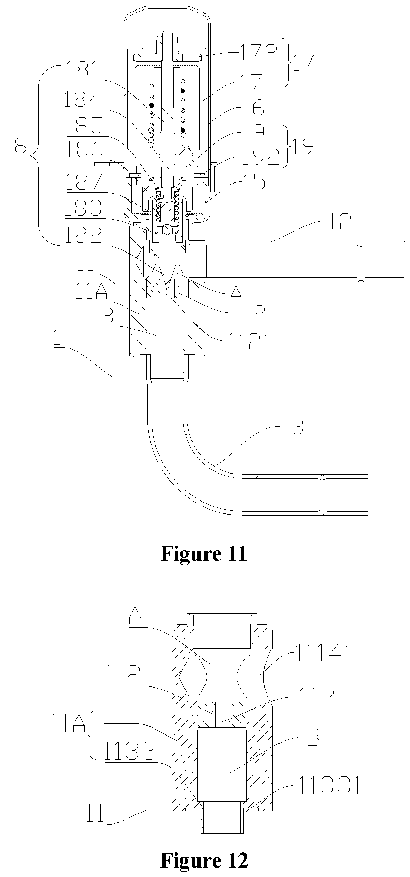

The valve seat assembly 11 according to the present embodiment may also be correspondingly changed, as shown in Figures 11 and 12. Figure 11 is a schematic sectional view of another electronic expansion valve according to the third embodiment of the present application; and Figure 12 is a schematic sectional view of the valve seat assembly in Figure 11. The second port portion 11331 not only may be arranged on the part of the circumferential wall portion 111 located below the valve port portion 112, but also may be arranged on the bottom wall portion 1133. When the second port portion 11331 is arranged on the bottom wall portion 1133, in order to make the cooperation between the second port portion 11331 and the valve seat assembly 11 more firmly, the extended portion extending downward along the periphery of the second port portion 11331 may be arranged on the bottom wall portion 1133, the extended portion is matched with the second pipe connecting portion 13. Specifically, the second pipe connecting portion 13 is sleeved on the periphery of the extended portion, or the extended portion is sleeved on the periphery of the second pipe connecting portion 13. At this time, the first pipe connecting portion 12 is at least mostly located above the valve port portion 112, and the second pipe connecting portion 13 is at least mostly located below the valve port portion 112.

The second valve seat chamber B is greater than the second pipe connecting portion 13, that is, the inner diameter of the second valve seat chamber B is greater than the inner diameter of the second pipe connecting portion 13, or in other words, the diameter of the second valve seat chamber B is greater than the diameter of the second pipe connecting portion 13, and the inner diameter of the valve port 1121 is less than the inner diameter of the second valve seat chamber B or the diameter at the minimum position of the valve port 1121 is less than the diameter of the second valve seat chamber B. Specifically, the diameter of the second valve seat chamber close to the valve port portion 112 is greater than the diameter of the second pipe connecting portion 13 or the average diameter of the second valve seat chamber B is greater than the diameter of the second pipe connecting portion 13. The diameter of the second valve seat chamber B is greater than the diameter at the minimum position of the valve port 1121. The shape of the valve port 1121 may have multiple different inner diameters or diameters. The diameter of the valve port 1121 is the diameter at the minimum position of the valve port 1121. When the second valve seat chamber B is basically a regularly cylindrical chamber, the inner diameter of the second valve seat chamber B is the inner diameter of the second valve seat chamber B. When the second valve seat chamber B is irregular, the second valve seat chamber B may be inverted plate-shaped, stepped or a combination of multiple structures. When the second pipe connecting portion 13 is fixedly connected to the valve seat assembly 11 after enlarging or reducing, the inner diameter of the second pipe connecting portion 13 refers to the inner diameter of the second pipe connecting portion 13 before enlarging or reducing, or when the section of the second pipe connecting portion 13 is non-standard circular, the inner diameter of the second pipe connecting portion 13 is referred to as the diameter of the second pipe connecting portion 13. The electronic expansion valve includes the first valve seat chamber A and the second valve seat chamber B. When the refrigerant flows in a flow direction, the refrigerant enters into the second valve seat chamber B through the valve port of the valve port portion from the first valve seat chamber A, since the second valve seat chamber B is greater than the second pipe connecting portion 13, and greater than the valve port 1121, the flow rate and pressure of the refrigerant will be reduced after the refrigerant passed through the valve port 1121, thus reducing the noise when the refrigerant passes through the electronic expansion valve.

The "circumferential wall portion" recorded in the description and claims of the present application refers to the integral peripheral wall portion of the valve seat assembly, which can be an integral structure or formed by fixedly connecting the two or more components, while the "first circumferential wall portion" and "second peripheral wall portion" are the concepts introduced to facilitate the description of the valve seat assembly formed by assembling separately. Each of the first circumferential wall portion and the second circumferential wall portion is a portion for forming the circumferential wall portion. In addition to the first circumferential wall portion and the second circumferential wall portion, the circumferential wall portion may also include other components or other portions, for example, in the second embodiment, the end cover also includes a part of the circumferential wall portion. The typical structures of the first circumferential wall portion and the second circumferential wall portion are recorded in the above-mentioned related embodiments. Certainly, on the basis of the above-mentioned embodiments, the shape of the first and second circumferential wall portions may be simply changed to obtain new embodiments.

In the description and claims of the present application, "valve port portion" refers to a region where the valve port is provided or a relatively middle region relatively close to the valve port. "Bottom wall portion" means a bottom region of the valve seat assembly opposite to the valve port. In this application, the names of "valve port portion" and "bottom wall portion" do not mean that "valve port portion" and "bottom wall portion" must be independent components. For example, in the second embodiment, the bottom wall portion is formed by a part of the end cover.

It should be noted that the orientation terms such as up, down, left, right mentioned in the embodiment are all introduced for the convenience of description based on the drawings in the description; and the ordinal terms such as "first" and "second" in the component name are also introduced for the convenience of description, and do not mean to make any restriction on any order of the components. In addition, since the functions of some portions of the components provided by the embodiment are the same, the specification adopts a unified naming method for these portions.

The electronic expansion valve and the valve seat assembly provided by the relevant technical solutions are introduced in detail, which uses specific examples to illustrate in this application. The above description of the embodiments is only used to help understand the method and core idea of the present application. It should be noted that, for those skilled in the art that the technical solution of the present application may be further combined, variously improve and modified without departing from the principle of the present application.

## Claims

1. An electronic expansion valve, comprising:
a valve seat assembly (11);
a first pipe connecting portion (12); and
a second pipe connecting portion (13), wherein,
the valve seat assembly (11) comprises an outer wall portion (11A) and a valve port portion (112) provided with a valve port (1121),
the electronic expansion valve further comprises a first valve seat chamber (A) and a second valve seat chamber (B), at least most part of the first valve seat chamber (A) is located above the valve port portion (112), and at least most part of the second valve seat chamber (B) is below the valve port portion (112), the valve port (1121) is configured to communicate the first valve seat chamber (A) with the second valve seat chamber (B), the first pipe connecting portion (12) is fixedly connected to the outer wall portion (11A), and a connection portion between the first pipe connecting portion (12) and the outer wall portion (11A) is relatively close to the first valve seat chamber (A), the second pipe connecting portion (13) is fixedly connected to the outer wall portion (11A), and a connection portion between the second pipe connecting portion (13) and the outer wall portion (11A) is relatively close to the second valve seat chamber (B), a diameter of the second valve seat chamber (B) relatively close to the valve port portion (112) is greater than a diameter of the second pipe connecting portion (13), and the diameter of the valve port (1121) is less than a diameter of the second valve seat chamber (B); and
wherein the outer wall portion (11A) is an integrated structure, and the outer wall portion (11A) is in interference fit with the valve port portion (112) or the outer wall portion (11A) is fixed to the valve port portion (112) by welding, the outer wall portion (11A) comprises a circumferential wall portion (111) and a bottom wall portion (1133), a first port portion (11141) is provided on the circumferential wall portion (111), at least most part of the first port portion (11141) is located above the valve port portion (112), a second port portion (11331) is provided on the bottom wall portion (1133), and the second port portion (11331) is located below the valve port portion (112); and
an inner chamber of the first pipe connecting portion (12) is in direct communication with the first valve seat chamber (A), and an inner chamber of the second pipe connecting portion (13) is in direct communication with the second valve seat chamber (B).

2. The electronic expansion valve according to claim 1, wherein, the valve port portion (112) is located a middle region of the valve seat assembly (11) in the axial direction, the bottom wall portion (1133) is opposite to the valve port portion (112), the second port portion (11331) is opposite to the valve port portion, a diameter of the valve port portion (112) is less than the diameter of the second port portion (11331), and the diameter of the second valve seat chamber (B) is greater than the diameter of the second port portion (11331).

## Patentansprüche

1. Elektronisches Expansionsventil, aufweisend:
eine Ventilsitzanordnung (11) ;
einen ersten Rohrverbindungsabschnitt (12); und
einen zweiten Rohrverbindungsabschnitt (13), wobei
die Ventilsitzanordnung (11) einen Außenwandabschnitt (11A) und einen Ventilöffnungsabschnitt (112) aufweist, der mit einer Ventilöffnung (1121) versehen ist,
das elektronische Expansionsventil ferner eine erste Ventilsitzkammer (A) und eine zweite Ventilsitzkammer (B) aufweist, sich zumindest der wesentliche Teil der ersten Ventilsitzkammer (A) über dem Ventilöffnungsabschnitt (112) befindet, und zumindest der wesentliche Teil der zweiten Ventilsitzkammer (B) unter dem Ventilöffnungsabschnitt (112) ist, die Ventilöffnung (1121) derart konfiguriert ist, dass sie die erste Ventilsitzkammer (A) mit der zweiten Ventilsitzkammer (B) verbindet, der erste Rohrverbindungsabschnitt (12) fest mit dem Außenwandabschnitt (11A) verbunden ist, und ein Verbindungsabschnitt zwischen dem ersten Rohrverbindungsabschnitt (12) und dem Außenwandabschnitt (11A) relativ nahe bei der ersten Ventilsitzkammer (A) ist, der zweite Rohrverbindungsabschnitt (13) fest mit dem Außenwandabschnitt (11A) verbunden ist, und ein Verbindungsabschnitt zwischen dem zweiten Rohrverbindungsabschnitt (13) und dem Außenwandabschnitt (11A) relativ nahe bei der zweiten Ventilsitzkammer (B) ist, ein Durchmesser der zweiten Ventilsitzkammer (B) relativ nahe dem Ventilöffnungsabschnitt (112) größer ist als ein Durchmesser des zweiten Rohrverbindungsabschnitts (13), und der Durchmesser der Ventilöffnung (1121) kleiner ist als ein Durchmesser der zweiten Ventilsitzkammer (B); und
wobei der Außenwandabschnitt (11A) eine integrierte Struktur ist und der Außenwandabschnitt (11A) in Presspassung mit dem Ventilöffnungsabschnitt (112) ist oder der Außenwandabschnitt (11A) durch Schweißen an dem Ventilöffnungsabschnitt (112) befestigt ist, wobei der Außenwandabschnitt (11A) einen Umfangswandabschnitt (111) und eine unteren Wandabschnitt (1133) aufweist, ein erster Öffnungsabschnitt (11141) an dem Umfangswandabschnitt (111) vorgesehen ist, sich zumindest der wesentliche Teil des ersten Öffnungsabschnitts (11141) über dem Ventilöffnungsabschnitt (112) befindet, ein zweiter Öffnungsabschnitt (11331) an dem unteren Wandabschnitt (1133) vorgesehen ist, und sich der zweite Öffnungsabschnitt (11331) unter dem Ventilöffnungsabschnitt (112) befindet; und
eine innere Kammer des ersten Rohrverbindungsabschnitts (12) in direkter Verbindung mit der ersten Ventilsitzkammer (A) steht, und eine innere Kammer des zweiten Rohrverbindungsabschnitts (13) in direkter Verbindung mit der zweiten Ventilsitzkammer (B) steht.

2. Elektronisches Expansionsventil gemäß Anspruch 1, wobei der Ventilöffnungsabschnitt (112) sich in einem mittleren Bereich der Ventilsitzanordnung (11) in der axialen Richtung befindet, der untere Wandabschnitt (1133) dem Ventilöffnungsabschnitt (112) gegenüberliegt, der zweite Öffnungsabschnitt (11331) dem Ventilöffnungsabschnitt gegenüberliegt, ein Durchmesser des Ventilöffnungsabschnitts (112) kleiner ist als der Durchmesser des zweiten Öffnungsabschnitts (11331), und der Durchmesser der zweiten Ventilsitzkammer (B) größer als der Durchmesser des zweiten Öffnungsabschnitts (11331) ist.

## Revendications

1. Vanne d'expansion électronique comprenant :
un ensemble siège de vanne (11) ;
une première partie de raccordement de tuyau (12) ; et
une deuxième partie de raccordement de tuyau (13), dans laquelle
l'ensemble siège de vanne (11) comprend une partie de paroi extérieure (11A) et une partie d'orifice de vanne (112) fournie avec un orifice de vanne (1121),
la vanne d'expansion électronique comprend en outre une première chambre de siège de vanne (A) et une deuxième chambre de siège de vanne (B), au moins la majeure partie de la première chambre de siège de vanne (A) est située au-dessus de la partie d'orifice de vanne (112), et au moins la majeure partie de la deuxième chambre de siège de vanne (B) est sous la partie d'orifice de vanne (112), l'orifice de vanne (1121) est configuré pour mettre en communication la première chambre de siège de vanne (A) avec la deuxième chambre de siège de vanne (B), la première partie de raccordement de tuyau (12) est raccordée fixement à la partie de paroi extérieure (11A), et une partie de raccordement entre la première partie de raccordement de tuyau (12) et la partie de paroi extérieure (11A) est relativement proche de la première chambre de siège de vanne (A), la deuxième partie de raccordement de tuyau (13) est raccordée fixement à la partie de paroi extérieure (11A), et une partie de raccordement entre la deuxième partie de raccordement de tuyau (13) et la partie de paroi extérieure (11A) est relativement proche de la deuxième chambre de siège de vanne (B), un diamètre de la deuxième chambre de siège de vanne (B) relativement proche de la partie d'orifice de vanne (112) est plus grand qu'un diamètre de la deuxième partie de raccordement de tuyau (13), et le diamètre de l'orifice de vanne (1121) est inférieur à un diamètre de la deuxième chambre de siège de vanne (B) ; et
dans laquelle la partie de paroi extérieure (11A) est une structure intégrée, et la partie de paroi extérieure (11A) est en ajustement serré avec la partie d'orifice de vanne (112) ou la partie de paroi extérieure (11A) est fixée à la partie d'orifice de vanne (112) par soudage, la partie de paroi extérieure (11A) comprend une partie de paroi circonférentielle (111) et une paroi de paroi inférieure (1133), une première partie d'orifice (11141) est fournie sur la partie de paroi circonférentielle (111), au moins la majeure partie de la première partie d'orifice (11141) est située au-dessus de la partie d'orifice de vanne (112), une deuxième partie d'orifice (11331) est fournie sur la partie de paroi inférieure (1133), et la deuxième partie d'orifice (11331) est située sous la partie d'orifice de vanne (112) ; et
une chambre intérieure de la première partie de raccordement de tuyau (12) est en communication directe avec la première chambre de siège de vanne (A), et une chambre intérieure de la deuxième partie de raccordement de tuyau (13) est en communication directe avec la deuxième chambre de siège de vanne (B).

2. Vanne d'expansion électronique selon la revendication 1, dans laquelle la partie d'orifice de vanne (112) est située dans une zone centrale de l'ensemble siège de vanne (11) dans la direction axiale, la partie de paroi inférieure (1133) est opposée à la partie d'orifice de vanne (112), la deuxième partie d'orifice (11331) est opposée à la partie d'orifice de vanne, un diamètre de la partie d'orifice de vanne (112) est inférieur au diamètre de la deuxième partie d'orifice (11331), et le diamètre de la deuxième chambre de siège de vanne (B) est plus grand que le diamètre de la deuxième partie d'orifice (11331).
